# EUROPÄISCHE PATENTANMELDUNG

(11) **EP 4 811 302 A1**
(43) Veröffentlichungstag der Anmeldung: **23.09.2026**
(21) Anmeldenummer: 25164281.5
(22) Anmeldetag: 18.03.2025
(51) Int. Cl.: G06V 10/82, G06V 20/20, G06V 20/52, G06V 10/774

(54) **VERFAHREN UND COMPUTERPROGRAMMPRODUKT ZUM TRAINIEREN EINES BILDERKENNUNGSMODELLS, WELCHES EINEN REALEN UMGEBUNGSBEREICH ABBILDET, SOWIE ERFASSUNGS- UND DARSTELLUNGSSYSTEM ZUM AUSFÜHREN EINES SOLCHEN VERFAHRENS**

(71) Anmelder: Universität Kassel (Körperschaft d. öffentlichen Rechts), 34125 Kassel (DE)
(72) Erfinder: PFLEGING, Johannes, 34130 Kassel (DE); STRÄTER, Oliver, 34131 Kassel (DE); KRAVTCHENKO, Michael, 34134 Kassel (DE)
(74) Vertreter: Walther Bayer Faber Patentanwälte PartGmbB

(57) **Zusammenfassung**

Die vorliegende Erfindung betrifft ein Verfahren zum Trainieren eines Bilderkennungsmodells, welches einen realen Umgebungsbereich (10) abbildet, umfassend die folgenden Schritte:
- Vermessen des Umgebungsbereichs (10) und Erzeugen von entsprechenden Umgebungsbereichsdaten,
- Importieren der Umgebungsbereichsdaten in eine Visualisierungssoftware (16) und Visualisieren des vermessenen Umgebungsbereichs (10),
- Auswählen von einem oder mehreren relevanten Ausschnitten (181, 182) aus dem vermessenen Umgebungsbereichs (10) und Benennen der ausgewählten, relevanten Ausschnitte (181, 182) sowie Erzeugen von entsprechenden Ausschnittsdaten,
- Definieren einer Mehrzahl von virtuellen Betrachtungspositionen (22) des Umgebungsbereichs (10),
- Erzeugen von gerenderten Abbildern (23) des Umgebungsbereichs (10) ausgehend von den Betrachtungspositionen (22) unter Berücksichtigung der Ausschnittsdaten,
- Bereitstellen eines Bilderkennungsmodells, und
- Importieren der gerenderten Abbilder (23) und der Ausschnittsdaten in das Bilderkennungsmodell und Trainieren des Bilderkennungsmodells mittels der importierten Abbilder (23) und Ausschnittsdaten.

Zudem betrifft die Erfindung ein Computerprogramm zum Ausführen dieses Verfahrens und ein Erfassungs- und Darstellungssystem (28) zum Erfassen und Darstellen eines Umgebungsbereichs (10).

## Beschreibung

Die vorliegende Erfindung betrifft ein Verfahren und ein Computerprogrammprodukt zum Trainieren eines Bilderkennungsmodells, welches einen realen Umgebungsbereich abbildet, sowie ein Erfassungs- und Darstellungssystem zum Ausführen eines solchen Verfahrens.

Insbesondere getrieben von der zunehmenden Digitalisierung und Vernetzung ist es möglich, auch komplexe Produkte schneller als bisher zur Serienreife zu bringen. Je komplexer die Produkte werden, desto komplexer werden auch die hierfür eingesetzten Maschinen. Vor allem die erstmalige Inbetriebnahme, die Wartung und der Reparatur der Maschinen setzen ein umfangreiches Wissen der hierfür verantwortlichen Person voraus, was aber nicht immer bei den zur Verfügung stehenden Personen vorhanden ist. Beispielsweise bei der Inbetriebnahme einer Maschine oder einer Anlage muss sich die verantwortliche Person mit dieser vertraut machen und vor ihrem Start bestimmte Zustände überprüfen. Dazu muss er die entsprechenden Merkmale an der Maschine identifizieren, wie z.B. Anzeigen, Schalter, Knöpfe, Klappen und dergleichen.

Erschwerend kommt hinzu, dass sich die Innovationszyklen immer weiter verkürzen, wodurch die betreffenden Personen ihr Wissen immer wieder aktualisieren müssen, wovon man auch nicht immer ausgehen kann.

Ein Ansatz, um mit dieser Situation umzugehen, ist, der betreffenden Person aktuelle Informationen zu der betreffenden Maschine zur Verfügung zu stellen, um dieser Person beispielsweise bei der Inbetriebnahme, der Wartung oder der Reparatur eine Hilfestellung zu geben. Hierdurch soll ein Beitrag dazu geleistet werden, dass die Person die zu tätigenden Arbeiten schneller und mit weniger Fehlern erledigen kann als sonst. Derartige Informationen können beispielsweise mit einem Display, beispielsweise eines Smartphones oder Tablets, oder mittels einer Datenbrille, insbesondere mit einer AR-Brille (Augmented Reality), angezeigt werden, welche Teil von Assistenzsystemen sind. Die Informationen können eine Art Schritt-für-Schritt-Anweisung beinhalten, welche die betreffende Person durch die zu erledigende Aufgabe begleitet.

Neben den oben genannten Aufgaben der Inbetriebnahme, der Wartung und der Reparatur der Maschinen kann eine derartige Hilfestellung auch bei der Montage von komplexen Produkten, die nicht in Serie produziert werden, gegeben werden. Derartige Produkte können beispielsweise ein Schaltschrank sein, bei dessen Montage die betreffende Person eine Hilfestellung dahingehend bekommt, welche Steckverbindungen in welcher Reihenfolge und an welchem Ort herzustellen sind.

Derartige Assistenzsysteme sind beispielsweise in US 11 004 355 B2, der US 11 449 811 B2, der US 2020/0311164 A1 und der US 2021/0192413 A1 beschrieben. Damit die von den Assistenzsystemen bereitgestellte Hilfestellung hinreichend genau gegeben werden kann, ist es notwendig, ein virtuelles Abbild der Maschine oder des Arbeitsplatzes, an welchem ein Produkt montiert werden soll, zu erstellen.

Damit die von den Assistenzsystemen bereitgestellte Hilfestellung in Form einer Merkmalserkennung mit hinreichender Qualität bzw. Robustheit gegeben werden kann, kommen Bilderkennungsmodelle und/oder Bilderkennungsmethoden zum Einsatz, beispielsweise "Convolutional Neural Networks" oder "Vision Transformer".

Diese Bilderkennungsmodelle müssen mit Bildern und Labeln von den zu erkennenden Objekten trainiert werden. Das Erstellen der Labels ist ein zeitaufwendiger Prozess, der von Hand am eingesetzten Computer ausgeführt werden muss. Aufgrund des großen Zeitaufwands lohnt sich das Erstellen von solchen aus dem Stand der Technik bekannten Bilderkennungsmodellen nur bei Vorgängen, die länger andauern, beispielsweise bei einer Fließbandfertigung, nicht aber bei einmaligen oder selten vorkommenden Vorgängen wie die Inbetriebnahme einer Maschine oder Anlage oder deren Reparatur und Wartung.

Aufgabe einer Ausführungsform der vorliegenden Erfindung ist es, ein Verfahren und ein Computerprogrammprodukt zum Trainieren eines Bilderkennungsmodells zur Verfügung zu stellen, mit welchen es auf einfache, schnelle und wirtschaftliche Weise möglich ist, eine Abhilfe für die oben genannten Nachteile zu schaffen und insbesondere die Erstellung von Daten und Modellen für die zuvor genannten Assistenzsysteme zu beschleunigen. Des Weiteren liegt einer Ausgestaltung der vorliegenden Erfindung die Aufgabe zugrunde, ein Erfassungs- und Darstellungssystem zu schaffen, welches zum Durchführen dieses Verfahrens eingerichtet und ausgebildet ist.

Diese Aufgabe wird mit den in den Ansprüchen 1, 12 und 13 angegebenen Merkmalen gelöst. Vorteilhafte Ausführungsformen sind Gegenstand der Unteransprüche.

Eine Ausführungsform der Erfindung betrifft ein Verfahren zum Trainieren eines Bilderkennungsmodells, welches einen realen Umgebungsbereich abbildet, umfassend die folgenden Schritte:
- Vermessen des Umgebungsbereichs und Erzeugen von entsprechenden Umgebungsbereichsdaten mittels einer Vermessungseinrichtung,
- Importieren der Umgebungsbereichsdaten in eine Visualisierungssoftware und Visualisieren des vermessenen Umgebungsbereichs unter Verwendung der Visualisierungssoftware,
- Auswählen von einem oder mehreren relevanten Ausschnitten aus dem vermessenen Umgebungsbereich und Benennen der ausgewählten, relevanten Ausschnitte sowie Erzeugen von entsprechenden Ausschnittsdaten unter Verwendung der Visualisierungssoftware,
- Definieren einer Mehrzahl von virtuellen Betrachtungspositionen des Umgebungsbereichs mittels der Visualisierungssoftware,
- Erzeugen von gerenderten Abbildern des Umgebungsbereichs ausgehend von den Betrachtungspositionen unter Berücksichtigung der Ausschnittsdaten mittels der Visualisierungssoftware,
- Bereitstellen eines Bilderkennungsmodells mittels einer Bilderkennungssoftware, und
- Importieren der gerenderten Abbilder und der Ausschnittsdaten in das Bilderkennungsmodell und Trainieren des Bilderkennungsmodells mittels der importierten Abbilder und Ausschnittsdaten mittels der Bilderkennungssoftware.

Die Formulierung "mittels" könnte so verstanden werden, dass die betreffende Einheit die genannten Schritte autonom, also ohne manuelle, menschliche Unterstützung, ausführen kann, wohingegen die Formulierung "unter Verwendung" die manuelle Unterstützung nicht ausschließen könnte.

Die von der Vermessungseinrichtung gelieferten Umgebungsbereichsdaten können dabei eine Punktewolke umfassen, wobei zu jedem Punkt die Raumkoordinaten bekannt sind. Die Vermessungseinrichtung kann beispielsweise ein 3D-Scanner sein, der mit Licht oder anderen elektromagnetischen Wellen die Umgebung vermisst.

Die Ausschnittsdaten umfassen zumindest die Größe, die geometrische Gestalt, die Position und die Bezeichnung (Label) des ausgewählten Ausschnitts.

Der Schritt des Visualisierens des vermessenen Umgebungsbereichs kann manuell kontrolliert und nachbearbeitet werden. Fehlende Stellen können manuell interpoliert werden, sofern dies notwendig ist.

Die Definition der Betrachtungspositionen und ihrer Anzahl kann ausschließlich von der Visualisierungssoftware vorgenommen werden, allerdings kann auch hier manuell eingegriffen werden, wenn einige der von der Visualisierungssoftware definierten Betrachtungspositionen überflüssig oder suboptimal erscheinen.

Ein wesentlicher Aspekt des vorschlagsgemäßen Verfahrens ist, dass aus den Umgebungsbereichsdaten beispielsweise die für die eingangs näher beschriebene Hilfestellung benötigten Ausschnitte ausgewählt und nur diese benannt bzw. gelabelt werden müssen, sofern das Bilderkennungsmodell hierfür eingesetzt wird. Ein Ausschnitt kann beispielsweise auf eine Buchse gerichtet sein, in welche ein Stecker eingesteckt werden soll. Entsprechend klein ist der Ausschnitt, wodurch aber die Hilfestellung örtlich sehr genau und damit fehlerreduzierend gegeben werden kann. Bei dem eingangs erwähnten Schaltschrank sind typischerweise mehrere Buchsen eng nebeneinander angeordnet. Mit einer entsprechenden Wahl der Ausschnitte kann jede Buchse einzeln identifiziert werden.

Zudem ist es in kurzer Zeit möglich, eine große Zahl von auf die Ausschnitte bezogenen Daten zu generieren, mit denen die Bilderkennungsmodelle trainiert werden können. Die insgesamt zu verarbeitenden Datenmengen bleiben aber gering.

Das vorschlagsgemäße Verfahren ermöglicht somit den wirtschaftlichen Einsatz von Bilderkennungsmodellen beim Entwickeln von Assistenzsystemen für unterschiedliche Umgebungen und unterschiedliche Aufgaben. Somit ist es auch möglich, Assistenzsysteme für Aufgaben zu entwickeln, die einmalig oder nur selten durchgeführt werden, wie die bereits erwähnten Inbetriebnahmen, Wartungen und Reparaturen.

Nach Maßgabe einer weiteren Ausführungsform kann das Verfahren die folgenden Schritte umfassen:
- Installieren des trainierten Bilderkennungsmodells in einem Erfassungs- und Darstellungssystem zum Erfassen und Darstellen des Umgebungsbereichs,
- Erfassen des Umgebungsbereichs mittels des Erfassungs- und Darstellungssystems, und
- Identifizieren der Ausschnitte mittels des Bilderkennungsmodells und Darstellen des Umgebungsbereichs und der Ausschnitte mittels des Erfassungs- und Darstellungssystems.

Das Erfassungs- und Darstellungssystem dient dazu, den aktuellen Zustand des Umgebungsbereichs, beispielsweise der Maschine oder den relevanten Bereich eines Arbeitsplatzes oder einer

Anlage, zu erfassen und die zuvor definierten, relevanten Ausschnitte des Umgebungsbereichs so darzustellen, dass diese von der betreffenden Person, welcher die Hilfestellung gegeben werden soll, gut wahrgenommen werden können. Hierzu greift das Erfassungs- und Darstellungssystem auf das trainierte Bilderkennungsmodell zu.

In einer weitergebildeten Ausführungsform können die Umgebungsbereichsdaten
- geometrische Eigenschaften und/oder
- Farbeigenschaften und/oder
- Oberflächeneigenschaften und/oder
- Beleuchtung und/oder Schattenwurf
des Umgebungsbereichs umfassen.

Die hierzu eingesetzte Vermessungseinrichtung kann beispielsweise ein 3D-Scanner sein, wobei Sensoren eingesetzt werden können, die auf unterschiedlichen physikalischen Prinzipien beruhen, beispielsweise Ultraschall- oder Lidarsensoren. Die Oberflächeneigenschaften können beispielsweise dahingehend definiert werden, ob die Oberfläche matt oder glänzend ist oder eine Textur aufweist. Mit der Erfassung der genannten Eigenschaften des Umgebungsbereichs können die Qualität und die Zuverlässigkeit des Bilderkennungsmodells verbessert werden.

Bei einer weitergebildeten Ausführungsform kann der Schritt des Auswählens der relevanten Ausschnitte unter Verwendung von zweidimensionalen oder dreidimensionalen Konturen erfolgen. Zweidimensionale Konturen können beispielsweise Polygone wie Drei- oder Vierecke, aber auch Kreise oder Ellipsen oder eine Kombination hiervon sein. Dreidimensionale Konturen können Quader, Kugeln, Zylinder oder Ellipsoide sein. Mit diesen Konturen können die relevanten Ausschnitte so ausgewählt werden, dass diese möglichst klein bleiben, also möglichst wenige Teile des Umgebungsbereichs mit umfassen, die außerhalb der relevanten Ausschnitte liegen. Die zu verarbeitende Datenmenge wird hierdurch gering gehalten.

Wie eingangs erwähnt, kann der Umgebungsbereich ein Schaltschrank sein, in welchem eine Vielzahl von eng nebeneinander angeordneten Buchsen angeordnet ist, wobei in jede Buchse ein bestimmter Stecker eingesteckt werden muss. Die Konturen werden dabei so gewählt, dass die betreffende Buchse so ausgewählt werden kann, dass keine benachbart angeordnete Buchse auch nur teilweise im ausgewählten Abschnitt liegt. Die Genauigkeit der Hilfestellung kann hiermit erhöht werden, da der betreffenden Person insbesondere räumlich präzise Anweisungen gegeben werden. Hiermit kann sichergestellt werden, dass ein betreffender Stecker in die vorgesehene Buchse gesteckt wird.

Bei einer weiteren Ausführungsform können die Betrachtungspositionen und/oder die Anzahl der Betrachtungspositionen manuell und/oder von der Visualisierungssoftware zufällig gewählt werden. Je höher die Anzahl der Betrachtungspositionen, desto besser ist die Qualität der gerenderten Abbilder des Umgebungsbereichs und desto genauer kann das Bilderkennungsmodell trainiert werden. Allerdings wächst mit steigender Anzahl der Betrachtungspositionen auch die zu verarbeitende Datenmenge. Wenn die Visualisierungssoftware die Betrachtungspositionen selbst auswählt, können diese so gewählt werden, dass eine gute Qualität der gerenderten Abbilder mit einer geringen Anzahl von Betrachtungspositionen erlangt werden kann. Hierbei können selbstlernende Algorithmen auf der Visualisierungssoftware eingesetzt werden, um die Betrachtungspositionen und deren Anzahl optimal zu wählen.

Eine manuelle Auswahl der Betrachtungspositionen und deren Anzahl ist aber auch möglich. Zudem ist eine Kombination aus einer manuellen Auswahl und einer von der Visualisierungssoftware definierten Auswahl möglich. Die Visualisierungssoftware kann Vorschläge unterbreiten, die manuell akzeptiert, abgelehnt oder geändert werden können.

Eine weitergebildete Ausführungsform kann sich dadurch auszeichnen, dass im Umgebungsbereich eine Person eine Aufgabe ausführen soll und die hierzu notwendigen Schritte in den Ausschnitten erfolgen. In dieser Ausführungsform kann die Hilfestellung auf die Ausschnitte begrenzt werden, wo die notwendigen Schritte auch ausgeführt werden. Nicht benötigte Bereiche bleiben unberücksichtigt, weshalb die zu verarbeitenden Datenmengen gering gehalten werden können, ohne die Qualität der Hilfestellung zu verringern.

Nach Maßgabe einer weiteren Ausführungsform können die Ausschnittsdaten Aufgabeninformationen zu der auszuführenden Aufgabe enthalten, welche vom Erfassungs- und Darstellungssystem darstellbar sind oder dargestellt werden. Mit den Aufgabeninformationen kann die betreffende Person beim Lösen der Aufgabe unterstützt werden.

Bei einer weiteren Ausführungsform kann es sich anbieten, dass das Verfahren die folgenden Schritte umfasst, welche von der Erfassungs- und Darstellungssystem durchgeführt werden:
- Überwachen der Ausschnitte hinsichtlich der von der Person ausgeführten Schritte,
- Vergleich der ausgeführten Schritte mit den Aufgabeninformationen, und
- Erzeugen eines vom Ergebnis des Vergleichs abhängigen Vergleichssignals.

Die Aufgabeninformationen sind dabei so ausgestaltet, dass diese einen Sollzustand beinhalten, welcher die wunschgemäß gelöste Aufgabe beschreibt. So kann beispielsweise der Sollzustand dann erreicht werden, wenn ein Stecker einer bestimmten Farbe in eine Aufnahme eingesteckt ist, die sich in einer bestimmten Position befindet. Dieser Sollzustand kann mit dem erfassten Istzustand verglichen werden und ein Vergleichssignal in Abhängigkeit des Vergleichsergebnisses erzeugt werden. Dieses Vergleichssignal kann beispielsweise zu Dokumentationszwecken verwendet werden.

Eine weitergebildete Ausführungsform kann sich dadurch auszeichnen, das Vergleichssignal optisch und/oder akustisch und/oder haptisch vom Erfassungs- und Darstellungssystem ausgegeben wird. Bei einer Abweichung zwischen dem Sollwert und dem Istwert kann das Vergleichssignal als eine Fehlermeldung beispielsweise in Form eines akustischen Warnsignals ausgegeben werden, infolgedessen die betreffende Person den fehlerhaft ausgeführten Schritt sofort korrigieren oder den Schritt wiederholen kann. Die Zeit zur Fehlersuche kann gering gehalten werden, insbesondere deshalb, weil die betreffende Person sofort darauf hingewiesen wird, dass ein Fehler vorliegt.

Gemäß einer weiteren Ausführungsform soll im Umgebungsbereich ein Roboter eine Aufgabe ausführen, wobei die hierzu notwendigen Schritte in den Ausschnitten erfolgen. In dieser Ausführungsform kann ein Roboter mit einer Person zusammenarbeiten. Diese Zusammenarbeit wird häufig auch als Mensch-Roboter-Kollaboration ("Human Robot Collaboration") bezeichnet. Hierbei werden die Stärken des Roboters mit denen eines Menschen verbunden. Der Roboter kann immer wiederkehrende und für Menschen ermüdende Aufgaben erledigen, während der Mensch seine hohe Flexibilität und sein Verständnis der aktuellen Situation im Umgebungsbereich einbringt. Der Roboter kann der Person beispielsweise schwere Gegenstände derart angeben, dass die Person diese nicht anheben muss, wodurch Ermüdung und Belastungen bei der Person verringert werden.

Bei einer weiteren Ausführungsform kann es sich anbieten, dass das Verfahren die folgenden Schritte umfasst, welche vom Erfassungs- und Darstellungssystem durchgeführt werden:
- Überwachen der Ausschnitte hinsichtlich der vom Roboter ausgeführten Schritte,
- Vergleich der ausgeführten Schritte mit den Aufgabeninformationen, und
- Erzeugen eines vom Ergebnis des Vergleichs abhängigen Vergleichssignals.

Die zuvor beschriebene Übergabe eines Gegenstands vom Roboter an die Person und umgekehrt kann innerhalb eines oder mehrerer der ausgewählten Abschnitte erfolgen, welche hinsichtlich der auszuführenden Aufgabe überwacht werden. So kann beispielsweise der Abschnitt dahingehend überwacht werden, ob der Roboter überhaupt einen Gegenstand ergriffen hat, den er an die Person übergeben kann und wenn ja, ob es der korrekte Gegenstand ist, der zum Lösen der Aufgabe notwendig ist. Hat der Roboter den korrekten Gegenstand ergriffen, kann das Vergleichssignal als ein für die Person wahrnehmbares OK-Signal ausgegeben werden, so dass die Person ohne weitere Prüfung den Gegenstand übernehmen kann. Hat der Roboter entweder gar keinen oder den falschen Gegenstand ergriffen, kann das Vergleichssignal als ein für die Person wahrnehmbares Fehlersignal ausgegeben werden, insbesondere dann, wenn der Roboter den falschen Gegenstand ergriffen hat. Zudem kann das Fehlersignal auch bewirken, dass der Roboter den falschen Gegenstand zurücklegt und einen anderen, idealerweise den korrekten Gegenstand ergreift und der Person zur Übergabe anreicht.

Zudem kann auch geprüft werden, ob die Person den vom Roboter angereichten Gegenstand richtig ergriffen hat und der Roboter den Gegenstand loslassen kann, ohne dass der Gegenstand unkontrolliert zu Boden fällt und hierdurch Beschädigungen oder Verletzungen verursacht.

Eine Ausbildung der Erfindung betrifft ein Computerprogrammprodukt mit einem Programmcode, der auf einem von einem Computer lesbaren Medium gespeichert ist, zum Durchführen des Verfahrens nach einem der zuvor diskutierten Ausführungsformen.

Eine Ausgestaltung der Erfindung betrifft ein Erfassungs- und Darstellungssystem zum Erfassen und Darstellen des Umgebungsbereichs, welches eingerichtet und ausgebildet ist, um das Verfahren nach einem der zuvor diskutierten Ausführungsformen auszuführen, wobei das Erfassungs- und Darstellungssystem umfasst:
- Erfassungsmittel zum Erfassen des Umgebungsbereichs und
- Darstellungsmittel zum Darstellen des Umgebungsbereichs und der Ausschnitte.

Als Erfassungsmittel können Kameras und/oder geeignete Sensoren eingesetzt werden, mit denen der real vorliegende Umgebungsbereich erfasst werden kann. Darstellungsmittel können Displays von Smartphones, Tablets oder Monitoren sein.

Die technischen Effekte und Vorteile, die sich mit dem vorschlagsgemäßen Computerprogrammprodukt und dem Erfassungs- und Darstellungssystem erreichen lassen, entsprechen im Wesentlichen denjenigen, die für das vorliegende Verfahren erörtert worden sind. Zusammenfassend sei darauf hingewiesen, dass es in kurzer Zeit möglich ist, eine große Zahl von auf die Ausschnitte bezogenen Daten zu generieren, mit denen die Bilderkennungsmodelle trainiert werden können. Die insgesamt zu verarbeitenden Datenmengen bleiben aber gering. Hierdurch wird ein wirtschaftlicher Einsatz von Bilderkennungsmodellen beim Entwickeln von Assistenzsystemen für unterschiedliche Umgebungen und Aufgaben ermöglicht. Somit ist es auch möglich, Assistenzsysteme für Aufgaben zu entwickeln, die einmalig oder nur selten durchgeführt werden, wie die bereits erwähnten Inbetriebnahmen, Wartungen und Reparaturen.

In einer weiteren Ausgestaltung kann das Erfassungs- und Darstellungssignal Ausgabemittel zum Ausgeben des Vergleichssignals aufweisen. Die Vergleichssignale können insbesondere in optischer, akustischer oder haptischer Form vorliegen. Als Ausgabemittel für optische Vergleichssignale kann ein Display eines Tablets, eines Smartphones oder eines Monitors verwendet werden. In diesem Fall können die Ausgabemittel und die Darstellungsmittel in derselben Einheit integriert sein. Zur optischen Ausgabe kann ein Lautsprecher verwendet werden und zur haptischen Ausgabe ein Vibrationselement.

Eine fortentwickelte Ausgestaltung kann vorgeben, dass die Darstellungsmittel eine Datenbrille umfasst. Mit Datenbrillen, welche insbesondere als AR-Brillen ausgeführt sein können, können die Aufgabeninformationen der betreffenden Person in sein Blickfeld eingeblendet werden, ohne dass ein zusätzliches Display benötigt wird. Die Person muss seinen Blick nicht vom relevanten Ausschnitt abwenden, wodurch er die Aufgabe schneller und sicherer durchführen kann.

Beispielhafte Ausführungsformen der Erfindung werden im Folgenden unter Bezugnahme auf die beigefügten Zeichnungen näher erläutert. Es zeigen
- Figur 1: eine prinzipielle Darstellung eines realen Umgebungsbereichs, der von einem Bilderkennungsmodell abgebildet werden soll,
- Figur 2: ein gerendertes Abbild des in Figur 1 dargestellten Umgebungsbereichs,
- Figur 3: der in Figur 1 gezeigte Umgebungsbereich oder ein diesem entsprechender Umgebungsbereich, der mit einem Erfassungs- und Darstellungssystem ausgestattet ist, und
- Figur 4: ein Ablaufdiagramm zu den Schritten des erfindungsgemäßen Verfahrens.

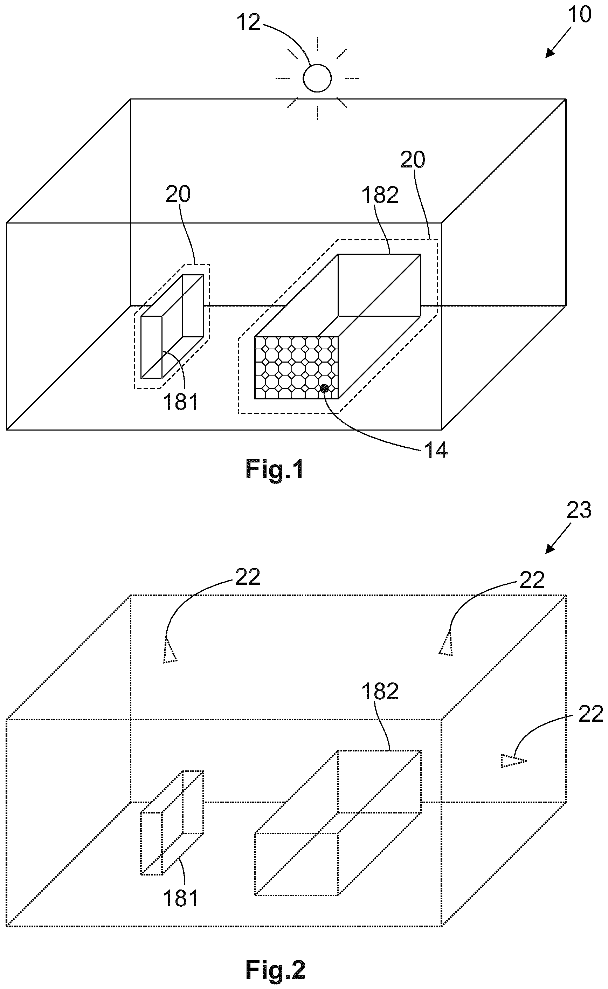

In Figur 1 ist ein realer Umgebungsbereich 10 anhand einer prinzipiellen, perspektivischen Darstellung gezeigt. Der Umgebungsbereich 10 ist in diesem Fall ein Arbeitsplatz, in welchem verschiedene Gegenstände angeordnet sind. Dies können Werkzeuge, Montagevorrichtungen, Tische oder dergleichen sein. Der Umgebungsbereich 10 kann aber auch von einer Maschine definiert werden.

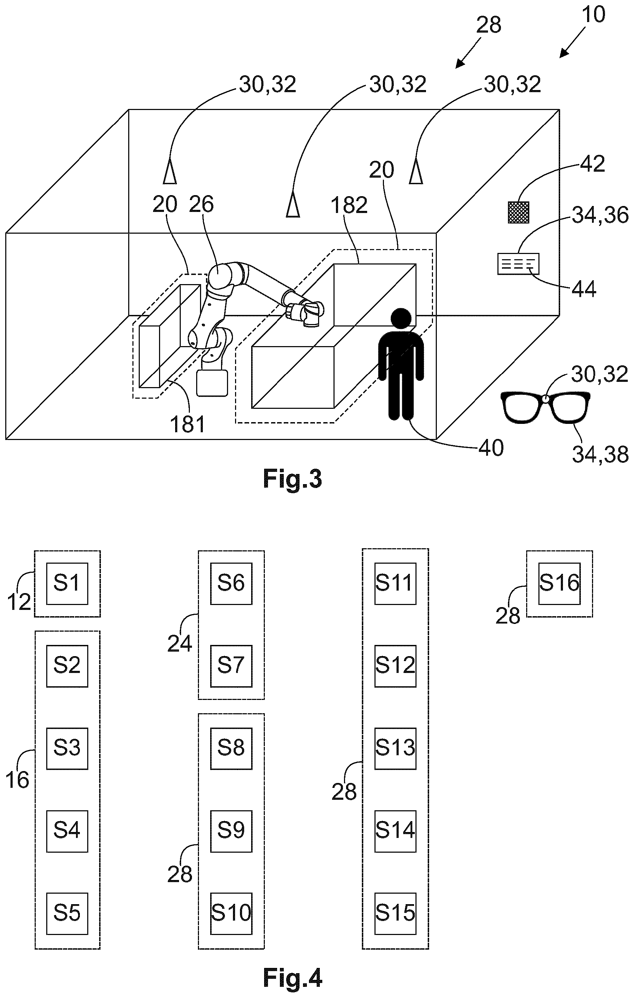

Weiterhin ist in Figur 1 eine Vermessungseinrichtung 12 erkennbar, mit welcher der Umgebungsbereich 10 vermessen werden kann. Die Vermessungseinrichtung 12 kann ein 3D-Scanner sein, welcher unter Verwendung von geeigneten Wellen, insbesondere von elektromagnetischen Wellen und/oder von mechanischen Wellen **(z.B.** Ultraschall), Umgebungsbereichsdaten erzeugt. Aufgrund einer Laufzeitmessung der von den Gegenständen, die sich im Umgebungsbereich 10 befinden, reflektierten Wellen kann eine Punktewolke generiert werden, bei welcher zu jedem ihrer Punkte die zugehörigen Raumkoordinaten bekannt sind. Das Vermessen des Umgebungsbereichs 10 und das Erzeugen der Umgebungsbereichsdaten entspricht dem Schritt S1, der in Figur 4 anhand eines Ablaufdiagramms dargestellt ist.

Die Umgebungsbereichsdaten können dabei Informationen 14 zu geometrischen Eigenschaften und/oder Farbeigenschaften, zu und/oder Oberflächeneigenschaften oder zu ähnliche Eigenschaften des Umgebungsbereichs 10 umfassen. Diese Informationen 14 sind in Figur 1 mittels einer Füllung einer Fläche symbolisiert dargestellt.

Diese Umgebungsbereichsdaten werden nun in eine Visualisierungssoftware 16 (Figur 4) importiert, in welcher unter Verwendung der Umgebungsbereichsdaten der Umgebungsbereich 10 visualisiert wird, was dem Schritt S2 des in Figur 4 dargestellten Ablaufdiagramms entspricht. Die visualisierte Version des in Figur 1 dargestellten Umgebungsbereichs 10 ist in Figur 2 dargestellt, die auch als "Digital Twin" bezeichnet werden könnte.

Anschließend werden unter Verwendung der Visualisierungssoftware 16 einer oder mehrere relevante Ausschnitte 181, 182 aus dem vermessenen Umgebungsbereichs 10 ausgewählt und benannt (siehe Figur 1). Das Benennen wird auch als Labeln bezeichnet. Das Auswählen und das Benennen werden manuell durchgeführt. Dabei kann die Auflösung der Visualisierung des Umgebungsbereichs 10 so weit minimiert werden, dass die Auswahl der relevanten Bereiche mit ausreichender Genauigkeit vorgenommen werden kann (Schritt S3 in Figur 4), die Datenmenge aber gering bleibt. Der Schritt des Auswählens der relevanten Ausschnitte 181, 182 erfolgt unter Verwendung von zweidimensionalen oder dreidimensionalen Konturen 20, hier unter Verwendung von Quadern, die um die interessierenden Gegenstände gelegt werden. Infolgedessen werden entsprechende Ausschnittsdaten erzeugt, welche den gewählten Ausschnitt definieren und die Benennung berücksichtigen.

In einem nächsten Schritt S4 definiert die Visualisierungssoftware 16 eine Mehrzahl von virtuellen Betrachtungspositionen 22 des Umgebungsbereichs 10, um insbesondere die relevanten Ausschnitte 181, 182 möglichst gut abbilden zu können. In Figur 2 sind drei Betrachtungspositionen 22 dargestellt, wobei die Anzahl auch erhöht werden kann, wenn es für die betreffende Anwendung erforderlich sein sollte. Sowohl die Betrachtungspositionen 22 selbst als auch ihre Anzahl wird von der Visualisierungssoftware 16 gewählt, was zufällig geschehen kann.

Im Schritt S5 werden gerenderte Abbilder 23 des Umgebungsbereichs ausgehend von den Betrachtungspositionen 22 unter Berücksichtigung der Ausschnittsdaten mittels der Visualisierungssoftware 16 erzeugt. Die Verwendung der gestrichelten Linien soll das gerenderte Abbild 23 des Umgebungsbereichs 10 symbolisieren ("Digital Twin").

Die Ausschnittsdaten werden hierbei von der Visualisierungssoftware 16 um die Informationen, welche infolge der Betrachtung des Umgebungsbereichs 10 aus den verschiedenen Betrachtungspositionen 22 gewonnen wurden, entsprechend ergänzt. Wenn CAD-Daten beispielsweise von einer Maschine, die sich im Umgebungsbereich 10 befindet, vorhanden sind, können diese Daten von der Visualisierungssoftware 16 ebenfalls berücksichtigt und die Ausschnittsdaten entsprechend ergänzt werden.

Gemäß Schritt S6 wird ein Bilderkennungsmodell mittels einer Bilderkennungssoftware 24 bereitgestellt, in welches die in Schritt S5 erzeugten Ausschnittsdaten und die gerenderten **Ab**bilder des Umgebungsbereichs 10 importiert werden (Schritt S7). Das Bilderkennungsmodell beinhaltet sowohl ein auf den Umgebungsbereichsdaten gerendertes Abbild 23 des Umgebungsbereichs 10 als auch die Ausschnittsdaten der aus dem Umgebungsbereich 10 ausgewählten Ausschnitte 181, 182. Das Bilderkennungsmodell wird mit den gerenderten Abbildern und den Ausschnittsdaten trainiert, wozu das Bilderkennungsmodell Algorithmen wie Convolutional Neural Networks und/oder dergleichen aufweisen kann.

Figur 3 zeigt ebenfalls einen realen Umgebungsbereich 10, welcher derselbe sein kann wie derjenige, der in Figur 1 dargestellt ist. Es ist aber auch möglich, dass der Umgebungsbereich 10 gemäß Figur 3 ein anderer ist als derjenige nach Figur 1. Jedoch muss der Umgebungsbereich 10 nach Figur 3 eine hinreichende Ähnlichkeit mit demjenigen nach Figur 1 aufweisen. Beispielsweise dann, wenn der Umgebungsbereich 10 von einer Maschine definiert wird, kann der Umgebungsbereich 10 beim Hersteller der Maschine vermessen werden. Eine Vermessung bei dem oder den Betreibern der Maschine ist dann überflüssig.

Der in Figur 3 dargestellte Umgebungsbereich 10 unterscheidet sich von demjenigen nach Figur 1 dadurch, dass ein Roboter 26 im Umgebungsbereich 10 angeordnet ist. Zudem ist im Umgebungsbereich 10 oder benachbart hiervon ein Erfassungs- und Darstellungssystem 28 installiert, welches über Erfassungsmittel, im dargestellten Ausführungsbeispiel über eine Anzahl von Kameras 32, verfügt, mit denen der Umgebungsbereich 10 fortlaufend überwacht werden kann. Weiterhin umfasst das Erfassungs- und Darstellungssystem 28 eine Anzahl von Darstellungsmitteln 34, welche im dargestellten Ausführungsbeispiel eine Datenbrille 38, hier ausgeführt als eine AR-Brille 38 (Augmented Reality), und ein Display 36 umfassen. Die Datenbrille 38 kann von einer Person 40 verwendet werden, welche eine Aufgabe zumindest in einem der Ausschnitte 181, 182 zu lösen hat. Die Datenbrille 38 kann ebenfalls eine Kamera 32 aufweisen, mit welcher der Umgebungsbereich 10 erfasst werden kann.

Zudem ist das Erfassungs- und Darstellungssystem 28 mit Ausgabemitteln 42 versehen, auf deren Funktion später eingegangen wird.

In einem Schritt S8 (vgl. Figur 4) wird das trainierte Bilderkennungsmodell auf dem Erfassungs- und Darstellungssystem 28 installiert. Der Umgebungsbereich 10 wird fortlaufend mit den Erfassungsmitteln erfasst (Schritt S9) und im Display 36 und/oder in der Datenbrille 38 dargestellt. Das Bilderkennungsmodell fügt die Ausschnitte 181, 182 in den Umgebungsbereich 10 dahingehend ein, dass diese im Display 36 und/oder in der Datenbrille 38 vom übrigen Umgebungsbereich 10 unterschieden werden können (Schritt S10).

Die Person 40 und der Roboter 26 sollen in den ausgewählten Ausschnitten 181, 182 eine oder mehrere Aufgaben ausführen. Beispielsweise soll der Roboter 26 ein Werkstück (nicht dargestellt) in einem ersten Ausschnitt 181 ergreifen und der Person 40 in einem zweiten Ausschnitt 182 übergeben. Zudem soll die Person 40 im zweiten Ausschnitt 182 an diesem Werkstück eine bestimmte Tätigkeit verrichten, beispielsweise mit einem anderen Werkstück verbinden.

Sowohl die dem ersten Ausschnitt 181 als auch die dem zweiten Ausschnitt 182 zugeordneten Ausschnittsdaten enthalten Aufgabeninformationen 44 zu den in den jeweiligen Abschnitten auszuführenden Aufgaben.

Hierzu überwacht das Erfassungs- und Darstellungssystem 28 zunächst den ersten Abschnitt dahingehend, ob der Roboter 26 überhaupt ein Werkstück ergriffen hat und wenn ja, ob das Werkstück das richtige ist (Schritte S14, S15). Das Erfassungs- und Darstellungssystem 28 nimmt dabei einen Vergleich zwischen den tatsächlich im ersten Abschnitt vom Roboter 26 durchgeführten Schritten und den diesbezüglichen Aufgabeninformationen 44 durch. Es wird mit anderen Worten eine Art Soll-Istwert-Vergleich durchgeführt. In Abhängigkeit des Ergebnisses dieses Vergleichs erzeugt das Erfassungs- und Darstellungssystem 28 ein Vergleichssignal, welches mit den Darstellungsmitteln 34 in optischer Form und/oder mit den Ausgabemitteln 42 beispielsweise in akustischer Form ausgegeben werden kann (Schritt S16). Hierzu umfassen die Ausgabemittel 42 einen oder mehrere Lautsprecher, die im in Figur 3 dargestellten Ausführungsbeispiel des Erfassungs- und Darstellungssystem 28 separat von den Darstellungsmitteln angeordnet sind, aber auch in diese integriert sein können. Es können OK-Signale oder Fehlermeldungen ausgegeben werden, so dass die Person 40 eine Information darüber erhält, ob der Roboter 26 seine Aufgabe richtig ausgeführt hat oder nicht.

Im Falle einer Fehlermeldung kann das Vergleichssignal den Roboter 26 dazu veranlassen, seine aktuelle, fehlerbehaftete Aufgabe abzubrechen und die Aufgabe zu wiederholen.

Für den Fall, dass der Roboter 26 seine Aufgabe im ersten Ausschnitt fehlerfrei durchgeführt hat, also das richtige Werkstück ergriffen hat, transportiert er es in den zweiten Ausschnitt und übergibt es an die Person 40, die im zweiten Ausschnitt das Werkstück mit einem anderen Werkstück verbinden soll. Das Erfassungs- und Darstellungssystem 28 prüft, ob die Person 40 das vom Roboter 26 angereichte Werkstück so ergriffen hat, dass der Roboter 26 dieses angereichte Werkstück loslassen kann. Ist dies der Fall, kann das Vergleichssignal so ausgestaltet sein, dass die Person 40 darüber informiert wird, dass der Roboter 26 nun das Werkstück loslässt, um ein Fallenlassen zu vermeiden. Danach prüft das Erfassungs- und Darstellungssystem 28, ob die Person 40 das angereichte Werkstück richtig mit dem anderen Werkstück verbunden hat (Schritt S11). Wiederum wird ein Vergleich mit den betreffenden Aufgabeninformationen 44 durchgeführt (Schritt S12) und entsprechendes Vergleichssignal ausgegeben (Schritt S13).

Es können sich weitere, in Figur 3 nicht dargestellte Aufgaben folgen, beispielsweise das Ablegen der beiden miteinander verbundenen Werkstücke mit dem Roboter 26 in einem dritten Ausschnitt. Hierbei kann auf dieselbe Weise vorgegangen werden wie zuvor beschrieben. Wie erwähnt, enthalten sowohl die dem ersten Ausschnitt 181 als auch die dem zweiten Ausschnitt 182 zugeordneten Ausschnittsdaten Aufgabeninformationen 44 zu den in den jeweiligen Abschnitten auszuführenden Aufgaben. Die dem zweiten Ausschnitt 182 zugeordneten Aufgabeninformationen 44 können beispielsweise mit dem Display 36 oder der Datenbrille 38 der Person 40 angezeigt werden, um ihr eine Hilfestellung beim Ausführen der Aufgaben zu geben.

In Figur 4 sind die Schritte, die vom erfindungsgemäßen Verfahren durchgeführt werden, anhand eines Ablaufdiagramms dargestellt, wobei die Schritte nicht notwendigerweise in der angegebenen Reihenfolge abgearbeitet werden müssen. Eine parallele Abarbeitung ist ebenfalls denkbar. Zudem sind die Einheiten dargestellt, von denen die Schritte durchgeführt werden.

### Bezugszeichenliste

- 10: Umgebungsbereich
- 12: Vermessungseinrichtung
- 14: Informationen zu geometrischen Eigenschaften, Farbeigenschaften, Oberflächeneigenschaften
- 16: Visualisierungssoftware
- 181, 182: Ausschnitt
- 20: Kontur
- 22: Betrachtungsposition
- 23: gerendertes Abbild
- 24: Bilderkennungssoftware
- 26: Roboter
- 28: Erfassungs- und Darstellungssystem
- 30: Erfassungsmittel
- 32: Kamera
- 34: Darstellungsmittel
- 36: Display
- 38: Datenbrille
- 40: Person
- 42: Ausgabemittel
- 44: Aufgabeninformationen

- S1 - S16: Schritte des Verfahrens

## Patentansprüche

1. Verfahren zum Trainieren eines Bilderkennungsmodells, welches einen realen Umgebungsbereich (10) abbildet, umfassend die folgenden Schritte:
- (S1): Vermessen des Umgebungsbereichs (10) und Erzeugen von entsprechenden Umgebungsbereichsdaten mittels einer Vermessungseinrichtung (12),
- (S2): Importieren der Umgebungsbereichsdaten in eine Visualisierungssoftware (16) und Visualisieren des vermessenen Umgebungsbereichs (10) unter Verwendung der Visualisierungssoftware (16),
- (S3): Auswählen von einem oder mehreren relevanten Ausschnitten (181, 182) aus dem vermessenen Umgebungsbereich (10) und Benennen der ausgewählten, relevanten Ausschnitte (181, 182) sowie Erzeugen von entsprechenden Ausschnittsdaten unter Verwendung der Visualisierungssoftware (16),
- (S4): Definieren einer Mehrzahl von virtuellen Betrachtungspositionen (22) des Umgebungsbereichs (10) unter Verwendung der Visualisierungssoftware (16),
- (S5): Erzeugen von gerenderten Abbildern (23) des Umgebungsbereichs (10) ausgehend von den Betrachtungspositionen (22) unter Berücksichtigung der Ausschnittsdaten mittels der Visualisierungssoftware (16),
- (S6): Bereitstellen eines Bilderkennungsmodells mittels einer Bilderkennungssoftware (24), und
- (S7): Importieren der gerenderten Abbilder (23) und der Ausschnittsdaten in das Bilderkennungsmodell und Trainieren des Bilderkennungsmodells mittels der importierten Abbilder (23) und Ausschnittsdaten mittels der Bilderkennungssoftware (24).

2. Verfahren nach Anspruch 1, umfassend folgende Schritte:
- (S8): Installieren des trainierten Bilderkennungsmodells in einem Erfassungs- und Darstellungssystem (28) zum Erfassen und Darstellen des Umgebungsbereichs (10),
- (S9): Erfassen des Umgebungsbereichs (10) mittels des Erfassungs- und Darstellungssystems (28), und
- (S10): Identifizieren der Ausschnitte (181, 182) mittels des Bilderkennungsmodells und Darstellen des Umgebungsbereichs (10) und der Ausschnitte (181, 182) mittels des Erfassungs- und Darstellungssystems (28).

3. Verfahren nach einem der Ansprüche 1 oder 2,
**dadurch gekennzeichnet, dass** die Umgebungsbereichsdaten Informationen (14) zu
- geometrischen Eigenschaften und/oder
- Farbeigenschaften und/oder
- Oberflächeneigenschaften und/oder
- Beleuchtung und/oder Schattenwurf
des Umgebungsbereichs (10) umfassen.

4. Verfahren nach einem der vorherigen Ansprüche,
**dadurch gekennzeichnet, dass** der Schritt (S3) des Auswählens der relevanten Ausschnitte (181, 182) unter Verwendung von zweidimensionalen oder dreidimensionalen Konturen (20) erfolgt.

5. Verfahren nach einem der vorherigen Ansprüche,
**dadurch gekennzeichnet, dass** die Betrachtungspositionen (22) und/oder die Anzahl der Betrachtungspositionen (22) manuell oder von der Visualisierungssoftware (16) zufällig gewählt werden.

6. Verfahren nach einem der vorherigen Ansprüche,
**dadurch gekennzeichnet, dass** im Umgebungsbereich (10) eine Person (40) eine Aufgabe ausführen soll und die hierzu notwendigen Schritte in den Ausschnitten (181, 182) erfolgen.

7. Verfahren nach den Ansprüchen 2 und 6,
**dadurch gekennzeichnet, dass** die Ausschnittsdaten Aufgabeninformationen (44) zu der auszuführenden Aufgabe enthalten, welche vom Erfassungs- und Darstellungssystem (28) darstellbar sind oder dargestellt werden.

8. Verfahren nach Anspruch 7,
**dadurch gekennzeichnet, dass** das Erfassungs- und Darstellungssystem (28) die folgenden Schritte ausführt:
- (S11): Überwachen der Ausschnitte (181, 182) hinsichtlich der von der Person (40) ausgeführten Schritte,
- (S12): Vergleich der ausgeführten Schritte mit den Aufgabeninformationen (44), und
- (S13): Erzeugen eines vom Ergebnis des Vergleichs abhängigen Vergleichssignals.

9. Verfahren nach Anspruch 8,
**dadurch gekennzeichnet, dass** das Vergleichssignal optisch und/oder akustisch und/oder haptisch vom Erfassungs- und Darstellungssystem (28) ausgegeben wird.

10. Verfahren nach einem der Ansprüche 6 bis 9,
**dadurch gekennzeichnet, dass** im Umgebungsbereich (10) ein Roboter (26) eine Aufgabe ausführen soll und die hierzu notwendigen Schritte in den Ausschnitten (181, 182) erfolgen.

11. Verfahren nach Anspruch 10,
**dadurch gekennzeichnet, dass** das Erfassungs- und Darstellungssystem (28) die folgenden Schritte ausführt:
- (S14): Überwachen der Ausschnitte (181, 182) hinsichtlich der vom Roboter (26) ausgeführten Schritte,
- (S15): Vergleich der ausgeführten Schritte mit den Aufgabeninformationen (44), und
- (S16): Erzeugen eines vom Ergebnis des Vergleichs abhängigen Vergleichssignals.

12. Computerprogrammprodukt mit einem Programmcode, der auf einem von einem Computer lesbaren Medium gespeichert ist, zum Durchführen des Verfahrens nach einem der vorherigen Ansprüche.

13. Erfassungs- und Darstellungssystem (28) zum Erfassen und Darstellen eines Umgebungsbereichs (10), welches eingerichtet und ausgebildet ist, um das Verfahren nach einem der Ansprüche 2 bis 11 auszuführen, umfassend
- Erfassungsmittel (30) zum Erfassen des Umgebungsbereichs (10) und
- Darstellungsmittel (34) zum Darstellen des Umgebungsbereichs (10) und der Ausschnitte (181, 182).

14. Erfassungs- und Darstellungssystem (28) nach Anspruch 13, **dadurch gekennzeichnet, dass** das Erfassungs- und Darstellungssignal Ausgabemittel (42) zum Ausgeben des Vergleichssignals aufweist.

15. Erfassungs- und Darstellungssystem (28) nach Anspruch 14, **dadurch gekennzeichnet, dass** die Darstellungsmittel (34) eine Datenbrille (38) umfasst.
